# EUROPÄISCHE PATENTSCHRIFT

(11) **EP 0 720 547 B1**
(45) Veröffentlichungstag und Bekanntmachung des Hinweises auf die Patenterteilung: **18.06.1997**
(21) Anmeldenummer: 94928261.0
(22) Anmeldetag: 27.09.1994
(51) Int. Cl.: B60S 1/08

(54) **EINRICHTUNG FÜR DIE AUTOMATISCHE STEUERUNG EINES SCHEIBENWISCHERMOTORS**
DEVICE FOR THE AUTOMATIC CONTROL OF A WINDSCREEN WIPER MOTOR
DISPOSITIF POUR LA COMMANDE AUTOMATIQUE D'UN MOTEUR D'ESSUIE-GLACE

(30) Priorität: 08.10.1993 DE 4334381
(43) Veröffentlichungstag der Anmeldung: 10.07.1996
(73) Patentinhaber: ETABLISSEMENT VORALP, FL-9494 Schaan (LI)
(72) Erfinder: DRÖGE, Bernhard, D-63543 Neuberg (DE)
(74) Vertreter: Schickedanz, Willi, Dipl.-Ing.
(86) Internationale Anmeldenummer: DE9401134
(87) Internationale Veröffentlichungsnummer: WO9510434

(56) Entgegenhaltungen:
- EP-A- 0 443 080
- EP-A- 0 547 337
- WO-A-90/08680
- DE-A- 3 314 770
- US-A- 4 495 452
- US-A- 4 867 561
- US-A- 4 916 374

## Beschreibung

Die Erfindung betrifft eine Einrichtung nach dem Oberbegriff des Patentanspruchs 1, die aus der DE-A-4 217 391 bekannt ist.

Um bei einer Fahrt durch den Regen mit einem Kraftfahrzeug gute Sicht auf die Fahrbahn zu behalten, ist es seit langem üblich, Scheibenwischer vorzusehen, welche die Windschutzscheibe wenigstens für eine bestimmte Zeit freimachen. Diese Scheibenwischer werden durch einen manuell betätigbaren Scheibenwischerschalter oder -hebel aktiviert, wobei bisweilen drei Schaltstellungen vorgesehen sind: eine für langsames Wischen, eine für schnelles Wischen und eine für Intervall-Wischen. Zusätzlich kann noch eine Wisch-Wasch-Schaltung vorgesehen sein, bei deren Betätigung Wasser aus einem Behälter auf die Scheibe gespritzt wird, um diese zu säubern.

Weil die manuelle Betätigung des Scheibenwischers insbesondere bei wechselhaftem Wetter lästig ist, wurden auch schon Scheibenwischersteuerungen vorgeschlagen, welche einen Sensor aufweisen, der die Feuchtigkeit auf der Windschutzscheibe erkennt und automatisch den Scheibenwischer in Abhängigkeit von der Feuchtigkeit ansteuert.

Bei der einfachsten Form der automatischen Scheibenwischersteuerung wird lediglich das Auftreten von Feuchtigkeit auf der Scheibe festgestellt und anschließend der Scheibenwischer betätigt. Dies hat jedoch den Nachteil, daß bereits bei geringsten Feuchtigkeiten, die für den Fahrer nicht wahrnehmbar sind, der Scheibenwischer in Aktion tritt. Um diesen Nachteil zu beheben, kann man einen Feuchtigkeits-Schwellwert festlegen, wobei erst bei dessen Überschreiten der Scheibenwischer betätigt wird.

Eine derartige Scheibenwischersteuerung hat indessen den Nachteil, daß auch dann noch gewischt wird, wenn es aufgehört hat zu regnen, weil dann immer noch der eingestellte Schwellwert überschritten sein kann. Als Folge hiervon würde der Scheibenwischer zu spät abgeschaltet und trocken wischen.

Um zwischen wirklichem Regen und bloßen Wasserschlieren unterscheiden zu können, wurde bereits vorgeschlagen, neben dem erwähnten Schwellwertschalter auch noch eine Anordnung vorzusehen, die feststellt, ob die Feuchtigkeit zu- oder abnimmt (DE-A-37 22 510). Nur wenn beide Bedingungen vorliegen - die vorgegebene Feuchtigkeitsschwelle ist überschritten und die Feuchtigkeit nimmt zu -, wird der Scheibenwischer aktiviert. Nachteilig ist bei dieser Anordnung, daß sie bereits bei kleinster Feuchtigkeitszunahme auf der Windschutzscheibe eine Auslösung des Scheibenwischermotors bewirkt.

Damit nicht bei jeder unwesentlichen Feuchtigkeitszunahme der Scheibenwischer betätigt wird, ist vorgeschlagen worden, nur dann eine Auslösung vorzunehmen, wenn der Betrag der Feuchtigkeitszunahme einen bestimmten Wert übersteigt (WO 90/08680).

Bei einer anderen bekannten Anordnung wird ein Sensor verwendet, der die auf der Windschutzscheibe auftreffenden Wassertropfen nach ihrer Größe unterscheidet (EP-A-0 549 010). Dieser Sensor weist zwei Elektroden auf, zwischen denen Lücken bestehen, die sich in ihrer Größe verändern. Hierdurch werden große Lücken nur durch große Tropfen überbrückt.

Weiterhin ist ein optischer Regensensor für eine Scheibenwischersteuerung bekannt, der mehrere Lichtsender und -empfänger enthält, wobei die von einem Lichtempfänger empfangenen Lichtsignale mit einem Bezugspegel verglichen werden. Wird der Bezugspegel überschritten, gibt der Sensor ein Signal ab. Aufgrund der Anzahl der Pegelüberschreitungen wird auf den Zustand auf der Außenseite der Windschutzscheibe geschlossen (US-PS 4 867 561). Nachteilig ist hierbei, daß etwa fünfzehn Lichtsender und -empfänger eingesetzt werden müssen.

Ferner wurde in der nicht vorveröffentlichten deutschen Offenlegungsschrift 42 17 391 eine Einrichtung für die automatische Steuerung eines Scheibenwischermotors vorgeschlagen, die mit einem Feuchtigkeitssensor ausgerüstet ist, der in Abhängigkeit von der Feuchtigkeit ein Signal abgibt (DE-A-4 217 391). Diese Einrichtung verfügt auch über eine Auswerteeinrichtung, die das Signal des Feuchtigkeitssensors auswertet, wobei sich das Sensorausgangssignal mit der Zeit ändert. Darüber hinaus ist eine Schaltungsanordnung vorgesehen, welche mit einer vom Sensorsignal abhängigen Einschaltschwelle versehen ist.

Schließlich ist auch noch eine selbsttätige Steuerung von Kraftfahrzeug-Scheibenwischanlagen bekannt, bei der ein kapazitiver Feuchtefühler vorgesehen ist und bei dem zur Signalauswertung ein Impulsverstärker zur Anwendung kommt (DE-A-2 630 470). Dieser Impulsverstärker siebt das durch Regentropfen verursachte Sprungverhalten eines Gleich- oder Wechselstroms aus und verstärkt es. Außerdem ist bei der bekannten Steuerung ein Zähler vorgesehen, der nach jeder Auslösung des Scheibenwischermotors auf Null zurückgesetzt wird. Eine Zählung der Anzahl der Überschreitungen einer Schwellwertkurve durch eine vom Meßfühler erzeugte Kurve findet hierbei jedoch nicht statt.

Der Erfindung liegt die Aufgabe zugrunde, das Ausgangssignal nur eines Feuchtigkeitssensors in der Weise auszuwerten, daß verschiedene Feuchtigkeitszustände auf einer Windschutzscheibe unterschieden werden können.

Diese Aufgabe wird gemäß den Merkmalen der Patentansprüche 1 und 6 gelöst.

Der mit der Erfindung erzielte Vorteil besteht insbesondere darin, daß durch das bloße Auszählen von Ereignissen auf der Windschutzscheibe, die zu einer Feuchtigkeitsänderung führen, auf verschiedene Feuchtigkeitszustände geschlossen werden kann. Entsprechend diesen Feuchtigkeitszuständen wird der Scheibenwischermotor aktiviert.

Anhand der nachfolgend beschriebenen Zeichnungen wird die Erfindung erläutert. Es zeigen:
- Fig. 1: das Ausgangssignal eines Feuchtigkeitssensors mit einem diesem Ausgangssignal zugeordneten Funktionswertsignal, wobei in dem Ausgangssignal mehrere impulsförmige Änderungen mit mittleren Amplituden vorliegen;
- Fig. 2: ein Ausgangssignal und ein Funktionswertsignal entsprechend Fig. 1, wobei jedoch im Ausgangssignal eine impulsförmige Änderung mit großer Amplitude vorliegt;
- Fig. 3: ein Sensor-Ausgangssignal mit einem zugehörigen Funktionswertsignal, wobei dicht aufeinander zwei impulsförmige Änderungen mit großer Amplitude im Sensor-Ausgangssignal auftreten;
- Fig. 4: ein Sensor-Ausgangssignal mit zugehörigem Funktionswertsignal, wobei sich das Sensor-Ausgangssignal dem Funktionswertsignal stetig nähert.

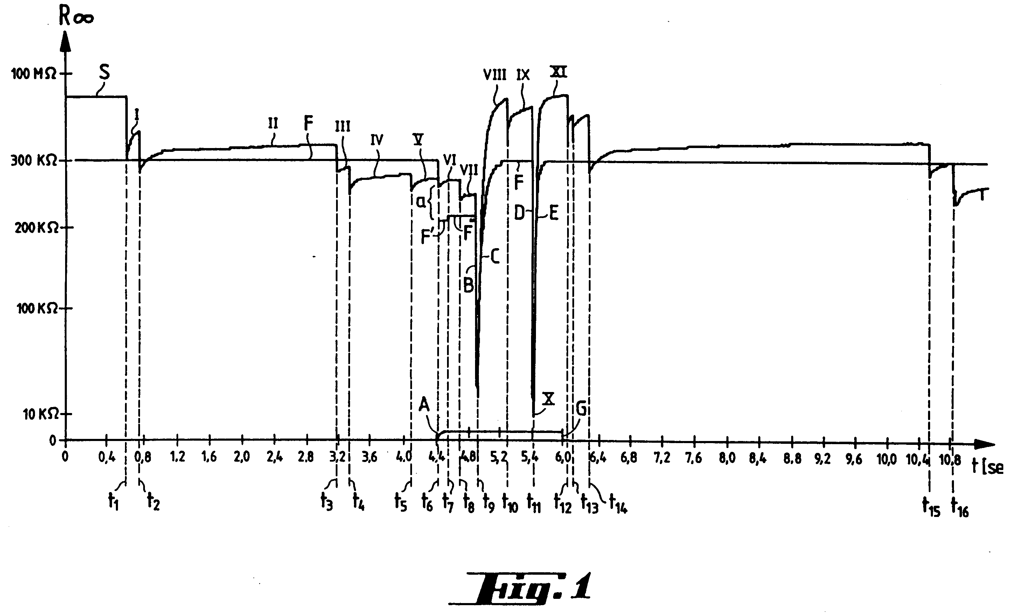

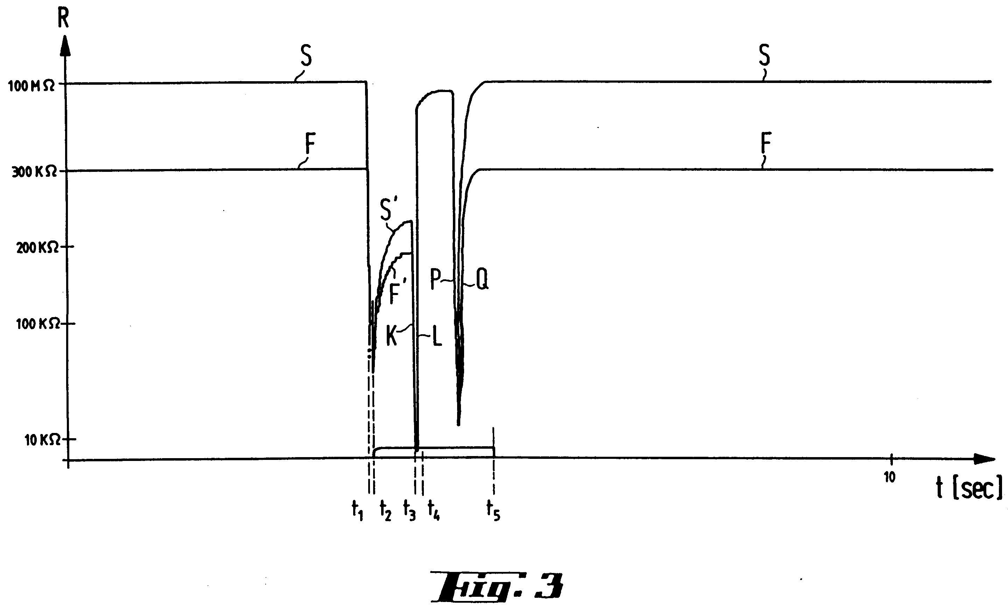

In der Fig. 1 ist das Ausgangssignal 1 eines nicht dargestellten Feuchtigkeitssensors dargestellt, das sich in Abhängigkeit von der auf der Außenseite einer Windschutzscheibe vorhandenen Feuchtigkeit ändert. Dieser Feuchtigkeitssensor kann beispielsweise so ausgebildet sein, wie er in der Fig. 3 der WO 90/08680 dargestellt ist, d. h. aus einem ohmschen Widerstand bestehen, der sich auf der Außenseite einer Windschutzscheibe befindet und in Abhängigkeit von der vorhandenen Feuchtigkeit ändert. Dieser Sensor wird von wenigstens einem Wischerblatt überwischt. Es ist jedoch auch möglich, diesen Sensor optisch, kapazitiv oder auf sonstige Weise auszubilden.

Die nachfolgend beschriebenen Figuren beziehen sich indessen auf einen ohmschen Widerstand, der sich im Bereich von 0 bis ∞ Ohm verändern kann. Der in der Praxis auftretende Widerstandsbereich erstreckt sich von etwa 10 kΩ bis 100 MΩ, was auf der nicht-linearen Ordinate der Fig. 1 angedeutet ist. Der in Fig. 1 betrachtete Zeitraum beträgt etwa 10 Sekunden. Ähnliche Darstellungen würden sich auch ergeben, wenn statt des Widerstands der Leitwert auf der Ordinaten angegeben wäre. Die nachfolgend verwendete Bezeichnung Schwellwertüberschreitung bzw. Schwellwertunterschreitung ist deshalb nur im Zusammenhang mit den jeweils betrachteten Sekunden eindeutig bestimmt. Die Ordinate, auf welcher der Widerstand aufgetragen ist, ist nicht linear, sondern quasi-logarithmisch.

Die Amplitude des Ausgangssignals S wird zyklisch abgetastet, beispielsweise mit einer Taktfrequenz von 10 kHz.

Unterhalb des Ausgangssignals S ist eine Funktionswertkurve F dargestellt, die eine Schwellwertkurve darstellt. Im allgemeinen ist diese Schwellwertkurve eine parallel zur Abszisse verlaufende Gerade. Sie kann jedoch verändert werden, so daß es sich im Grunde um eine variable Schwellwertkurve handelt, die mit konkreten Schaltmitteln (WO 90/08680) oder mittels programmierter Rechner erzeugt werden kann. Der jeweils gültige Schwellwert orientiert sich hierbei an dem beim Ausgangssignal 1 auftretenden Maximalwert.

Das Kriterium für die Auslösung des Scheibenwischermotors ist im Beispiel der Fig. 1 die Zahl der Feuchtigkeitsereignisse auf der Windschutzscheibe, die einen bestimmten Schwellwert überschreiten. Diese Zahl kann frei festgelegt werden. Gemäß dem Beispiel der Fig. 1 sind sechs Ereignisse erforderlich, um den Scheibenwischermotor zu aktivieren.

Während der betrachteten ersten 0,6 Sekunden ist das Sensor-Ausgangssignal S in etwa konstant, d. h. es tritt auf der Windschutzscheibe kein Feuchtigkeitsereignis auf. Im Zeitpunkt t₁ trifft z. B. ein Regentropfen oder ein Insekt auf den Sensor und bewirkt, daß sich der ohmsche Widerstand schlagartig um einen bestimmten Betrag absenkt. Der Widerstand ändert sich also nicht nur allgemein, sondern um einen bestimmten Betrag. Dieser Änderungsbetrag ist so groß, daß die Funktionswertkurve F unterschritten wird. Einen Änderungsbetrag zum entscheidenden Kriterium zu nehmen, ist bereits aus der erwähnten WO 90/08680 bekannt.

Da das Ausgangssignal S fortwährend abgetastet und mit dem variablen Schwellwert F verglichen wird, wird die Unterschreitung des Schwellwerts F festgestellt und gespeichert. Obgleich der Betrag der Änderung der Feuchtigkeit den für die Einschaltung des Scheibenwischers erforderlichen Wert erreicht hat, soll dennoch nicht eingeschaltet werden, weil es sich bei der Widerstandsabsenkung um ein einmaliges Ereignis handeln könnte, bei dem eine Einschaltung des Wischvorgangs nicht lohnt. Durch den Fahrtwind, Wärme oder andere Einflußgrößen verdunstet die Feuchtigkeit wieder, was durch den Kurvenabschnitt I zum Ausdruck kommt.

Im Zeitpunkt t₂ tritt erneut eine Feuchtigkeitserhöhung auf, was sich im Absinken des Ausgangssignals S bemerkbar macht. Auch dieses Mal wird der Funktions-Schwellwert F unterschritten. Aber noch immer erfolgt keine Auslösung des Scheibenwischermotors, weil auch zwei Ereignisse zu wenig erscheinen, um den Scheibenwischer zu betätigen. Es wird jedoch in einem Speicher festgehalten, daß zwei Ereignisse innerhalb einer bestimmten Zeit aufgetreten sind. Bis zum nachfolgenden Zeitpunkt t₃ tritt kein weiteres Ereignis auf, so daß die zum Zeitpunkt t₂ vorhandene Feuchtigkeit allmählich wieder verdunstet, was durch das Kurvenstück II dargestellt ist. Das Kurvenstück II ist nicht ganz glatt, weil während der Zeit t₃ - t₂ kleinste Feuchtigkeitsänderungen auftreten. Im Zeitpunkt t₃ fällt z. B. ein weiterer Regentropfen auf den Sensor, der so groß ist, daß die Amplitude der Widerstandsänderung wieder unter den Schwellwert F fällt. Dieser Schwellwert F ist bisher unverändert konstant geblieben, weil er erst dann geändert wird, wenn die Amplitude des Sensorsignals S einen neuen Maximalwert aufweist, verglichen mit einem früheren Maximalwert, der den Schwellwert F bestimmte.

Die dritte Feuchtigkeits- und damit Widerstandsänderung, die den Schwellwert F unterschreitet, soll indessen ebenfalls noch nicht zu einer Auslösung des Wischers führen. Es findet deshalb wieder eine Verdunstung der Feuchtigkeit und damit eine Widerstandszunahme statt, was durch den Kurvenzug III dargestellt ist. Bereits nach kurzer Zeit im Zeitpunkt t₄ kommt es jedoch zu einer erneuten Widerstandsabsenkung, die unterhalb des Schwellwerts F stattfindet. Eine Auslösung des Scheibenwischers erfolgt aber auch jetzt noch nicht, sondern lediglich eine Registrierung, daß inzwischen vier Feuchtigkeitsereignisse stattgefunden haben, die alle unter die Schwelle F gingen.

Nach einer weiteren, durch das Kurvenstück IV gekennzeichneten Verdunstungsphase tritt zum Zeitpunkt t₅ ein weiteres Feuchtigkeitsereignis ein. Auch dieses liegt unterhalb der Schwelle F, führt aber noch nicht zur Auslösung des Scheibenwischers, sondern zur Verdunstung, was durch den Kurvenabschnitt V zum Ausdruck kommt.

Erst nachdem zum Zeitpunkt t₆ das sechste Ereignis unterhalb der Schwelle F stattgefunden hat, wird der Scheibenwischer ausgelöst, was durch die Anstiegsflanke A markiert ist.

Der Scheibenwischer, bei dem es sich im vorliegenden Fall um einen Einarm-Scheibenwischer handelt, beginnt nun zu wischen. Zu Beginn des Wischvorgangs wird der Speicher, der die bisherigen Ereignisse gezählt und gespeichert hatte, gelöscht. Gleichzeitig wird ein neuer Funktions-Schwellwert F errechnet. Der Abstand a zwischen der Kurve V und dem neuen Schwellwert F wird durch eine vorgegebene Formel ermittelt, die jedoch einstellbare Parameter zuläßt, d. h. der Abstand a ist den jeweiligen Anforderungen bzw. Bedürfnissen entsprechend einstellbar. Damit ist es auch möglich, individuellen Wünschen entgegenzukommen und die Scheibenwischer-Automatik "empfindlich" oder "weniger empfindlich" einzustellen.

Zum Zeitpunkt t₇ tritt ein weiteres Ereignis ein, das aber dieses Mal über dem neuen Schwellwert liegt. Es wird bezüglich der Wischertätigkeit jedoch nicht beachtet. Allerdings stellt der Sensorwert S, der nach der Neueinstellung des Schwellwerts auf F' ein neues Maximum dar, so daß wieder ein neuer Schwellwert F'' errechnet wird. Das weitere Ereignis, das zum Zeitpunkt t₈ auftritt, liegt oberhalb dieses neuen Schwellwerts, wodurch weder der Scheibenwischer beeinflußt noch ein neuer Schwellwert errechnet wird.

Durch das Überstreichen des Sensors mit dem feuchten Wischblatt sinkt zunächst der Widerstand drastisch, was durch die Flanke B charakterisiert ist. Nachdem der Wischer auf dem Hinweg den Sensor überstrichen hat, steigt allerdings der Widerstand schnell wieder an, was durch die Flanke C gekennzeichnet ist. Das Ausgangssignal S steigt bis zum Zeitpunkt t₁₀ an, was durch das Kurvenstück VIII zum Ausdruck kommt. Da der Maximalwert dieses Kurvenstücks VIII über dem Maximalwert des Kurvenstücks VII liegt, wird ein neuer Schwellwert F errechnet, der im vorliegenden Fall mit dem ursprünglichen Schwellwert identisch ist. Das weitere Feuchtigkeitsereignis zum Zeitpunkt t₁₀ bewirkt keine Neueinstellung des Schwellwerts F, weil das Maximum des Kurvenstücks IX unterhalb des Maximums des Kurvenstücks VIII liegt. Das Ereignis wird auch nicht gezählt, weil das Wischerblatt noch nicht auf seinen Rückweg zum Sensor gelangt ist. Dies geschieht erst zum Zeitpunkt t₁₁. Der Beginn des Überstreichens des Sensors auf dem Rückweg des Wischerblatts ist durch die Flanke D gekennzeichnet. Die mit E bezeichnete Flanke charakterisiert dagegen den Feuchtigkeitszustand, wenn das Wischerblatt den Sensor verläßt. Nachdem die Flanke E aufgetreten ist, beginnt die Anordnung wieder mit dem Zählen der Ereignisse. Das Ende des Wischvorgangs ist durch die Flanke G gekennzeichnet. Der zwischen der Flanke G und A liegende Zeitabschnitt ist in der Regel durch den jeweiligen im Kraftfahrzeug eingebauten Scheibenwischer vorgegeben. Da die erfindungsgemäße Anordnung auch nachträglich bei bereits vorhandenen Scheibenwischern beliebiger Art einsetzbar sein soll, ist der jeweilige Zeitabschnitt A - G irrelevant. Vielmehr wird die wesentliche Information aus den Flanken D bzw. E geholt, wobei gegebenenfalls noch die Steilheit im Kurvenbereich X ermittelt wird. Nach einer gewissen Zeit stellt sich wieder ein hoher Widerstandswert ein, der durch das Kurvenstück XI gekennzeichnet ist. Mit ihm steigt der Schwellwert F auf seine alte Höhe. Das zum Zeitpunkt t₁₂ auftretende neue Ereignis bleibt unbeachtlich, weil es den Schwellwert F nicht erreicht. Das gleiche gilt für das Ereignis zum Zeitpunkt t₁₃. Erst das Ereignis zum Zeitpunkt t₁₄ wird wieder gezählt, da es den Schwellwert unterschreitet. Es löst jedoch noch keine Scheibenwischerbewegung aus, da hierzu noch fünf weitere Ereignisse auftreten müßten, die alle unter dem Funktionswert F liegen. Solche Ereignisse können jedoch erst zu den Zeitpunkten t₁₅ und t₁₆ auftreten.

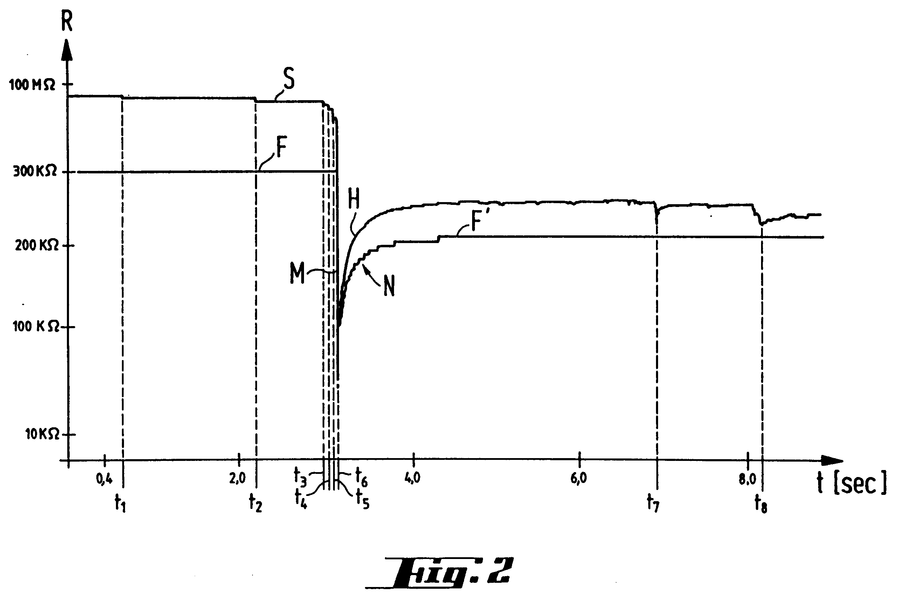

Während in der Fig. 1 mehrere in etwa gleichartige Feuchtigkeitsereignisse aufeinanderfolgen, wie es bei "normalem" Regen der Fall ist, zeigt die Fig. 2 die Veränderung eines Sensorausgangssignals S beim Auftreffen eines einmaligen und dicken Tropfens oder Insekts auf den Sensor, der bzw. das keine Auslösung des Scheibenwischers bewirken soll. Obgleich also eine relativ große Feuchtigkeitserhöhung auftritt, soll der Scheibenwischer nicht betätigt werden. Zu den Zeitpunkten t₁ und t₂ treten kleine Ereignisse auf, die eine minimale Veränderung in der Signalkurve S bewirken. Da sie nicht unter den Funktions-Schwellwert absinken, werden sie weder gezählt noch bewirken sie sonst etwas. Gleiches gilt für die kleinen Ereignisse zu den Zeitpunkten t₃, t₄, t₅. Erst zum Zeitpunkt t₆ tritt ein Ereignis ein, das eine erhebliche Reduzierung des Widerstandswerts zur Folge hat. Dieses Einzelereignis soll trotzdem noch keine Auslösung des Scheibenwischers bewirken, da es sich z. B. um das Auftreffen eines Käfers auf dem Sensor handeln kann, der anschließend wieder von der Scheibe fällt.

Im dargestellten Fall steigt der Widerstand nach dem rapiden Absinken wieder an, was durch die Flanke H gekennzeichnet ist. Das tiefe Absinken des Widerstandswerts gemäß Flanke M hat zwar keine Auslösung des Scheibenwischers zur Folge, bewirkt jedoch, daß die Funktionswert-Schwelle neu festgelegt wird. Im Kurvenbereich N des Funktionswerts F' hat die Kurve eine Treppenform, was sich aufgrund des digitalen Hochrechnens des neuen Schwellwerts ergibt.

Die Ereignisse zu den Zeitpunkten t₇ und t₈ bleiben ohne Wirkung, da sie die neue Schwelle F' nicht unterschreiten. Sie bilden auch keinen neuen Schwellwert, da sie keine neuen Maxima enthalten.

Tritt ein derart großes Ereignis wie in Fig. 2 auf, so wird nach dem Zeitpunkt t₆ der weitere Verlauf der Kurve S beobachtet. Wäre der niedrige Widerstandswert für längere Zeit existent geblieben, würde gewischt. Anders ausgedrückt: Nach einer deutlichen Veränderung der Kurve nach unten wird die Kurve für eine bestimmte Zeit, z. B. 10 ms, überwacht. Tritt innerhalb dieser Zeit keine Abtrocknung auf, wird gewischt.

Die Fig. 3 zeigt Kurvenverläufe, die dem Kurvenverlauf in Fig. 2 weitgehend entsprechen. Anders als dort wird jedoch der Scheibenwischer betätigt. Wie man aus der Fig. 3 erkennt, tritt zum Zeitpunkt t₁ ein großes Ereignis auf. Diesem großen Ereignis folgt schon zum Zeitpunkt t₂ ein weiteres großes Ereignis. Hierauf wird sofort der Scheibenwischer aktiviert, d. h. es wird nicht erst hochgezählt, bis sechs Ereignisse aufgetreten sind, sondern schon bei zwei Ereignissen geschaltet. Die Anzahl Z der Feuchtigkeitsereignisse, die zur Auslösung des Scheibenwischers führen, ist hier folglich selbst eine Funktion der Größe der Feuchtigkeitsänderung. Der Funktionswert F wird neu ermittelt, wodurch sich der Funktionswert F' ergibt. Mit den Flanken K und L zu den Zeitpunkten t₃ und t₄ sind die Widerstandsänderungen gekennzeichnet, die sich ergeben, wenn das Wischerblatt auf seinem Hinweg den Sensor überstreicht.

Das Überstreichen des Sensors durch das Wischerblatt auf dem Rückweg ist durch die Flanken P und Q gekennzeichnet. Am Ende sind S und F wieder auf ihrem alten Pegel.

Die Aktivierung des Scheibenwischers erfolgt zwischen t₅ und t₂.

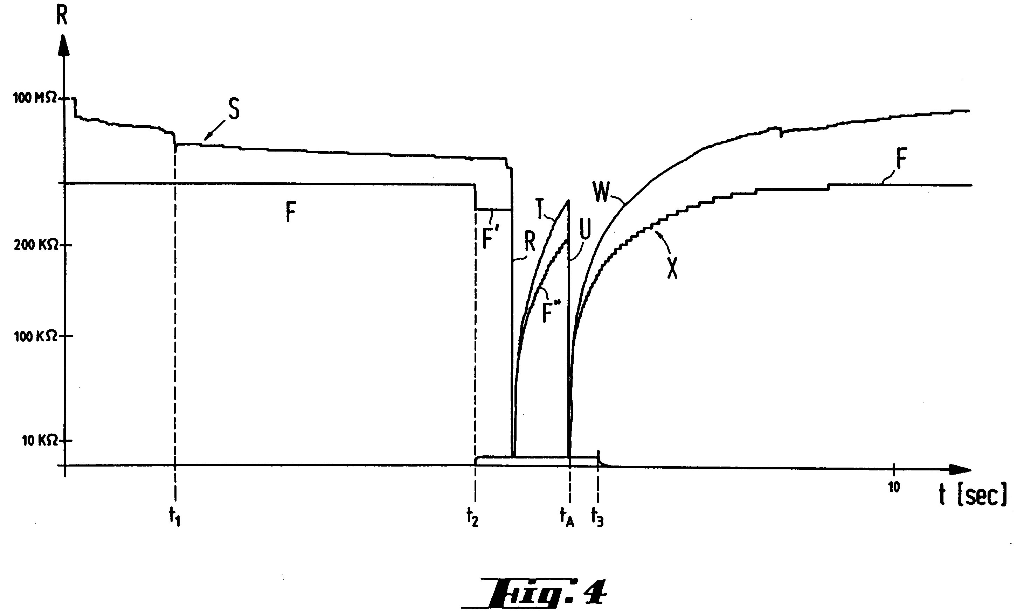

In der Fig. 4 sind Kurvenverläufe dargestellt, die sich z. B. bei Nebel ergeben, wenn nur sehr kleine Wassertröpfchen auf den Sensor treffen. Diese kleinen Wassertropfen erzeugen in der Signalkurve keine Einbrüche, welche die Schwellwertkurve unterschreiten.

Man erkennt, daß das Ausgangssignal des Sensors bis zum Zeitpunkt t₁ durch sehr Kleine Ereignisse allmählich sinkt. Dieses Sinken bewirkt zunächst noch nichts. Zum Zeitpunkt t₁ tritt allerdings ein etwas größeres Ereignis auf, das normalerweise nicht gezählt würde, weil es noch nicht unter die Schwelle F absinkt. Trotzdem wird dieses Ereignis im vorliegenden Fall gezählt, d. h. vom Zeitpunkt t₁ an wird die Kurve S überwacht. Die Überwachung besteht darin, daß die abgetasteten Werte der Kurve S mit dem Wert F verglichen werden. Stellt man eine abnehmende Tendenz dieser Amplitude über eine vorgegebene Zeit fest, so wird im Zeitpunkt t₂ der Wischer eingeschaltet, obwohl der Wert S noch nicht unter F gesunken war.

Mit dem Einschalten des Scheibenwischers zum Zeitpunkt t₂ wird gleichzeitig der Funktionswert F auf den Wert F' herabgesetzt. Die Kurve R bezeichnet das Sensor-Ausgangssignal, wenn der Wischer den Sensor auf dem Hinweg berührt. Mit der Kurve T ist das Signal bezeichnet, wenn der Wischer den Sensor auf dem Hinweg wieder verlassen hat. An die Kurve T angepaßt wird der Funktionsschwellwert F''. Berührt der Wischer den Sensor auf dem Rückweg, so geht der Widerstandswert erneut rapide nach unten, was durch die Flanke U gekennzeichnet ist. Wird der Sensor von dem Wischerblatt auf dem Rückweg wieder verlassen, steigt die Widerstandskurve an, was durch den Kurvenabschnitt W gekennzeichnet ist. Mit dem Anstieg der Widerstandskurve wird auch die Funktionskurve hochgerechnet, was durch den Kurvenabschnitt X dargestellt ist Der Scheibenwischer ist hierbei zwischen den Zeiten t₃ und t₂ eingeschaltet.

Der Kurvenabschnitt X weist eine Treppenform auf, die daraus resultiert, daß jeder neue Maximalwert von W eine digitale Nachberechnung des Funktionswerts F erfordert.

Die Fig. 1, 3 und 4, welche im praktischen Betrieb gemessene Kurven zeigen, lassen erkennen, daß bei Berührung des Sensors durch das Wischerblatt der Widerstandswert drastisch abfällt. Nachdem bei einem Wischervorgang letztmals ein Wischerblatt Berührung mit dem Meßfeld hatte, ergeben sich in Abhängigkeit von Restfeuchte, Schmutz, Zustand der Scheibe und des Wischerblatts die unterschiedlichen Widerstandswerte zwischen Null und Unendlich. Der Verlauf des Ausgangssignals ist deshalb sehr uneinheitlich und kann auch ohne das Auftreten neuer Feuchtigkeit von außen zwischenzeitlich absinken, was eine Anordnung, die nur dann reagiert, wenn die gemessene Feuchtigkeit zunimmt, unbrauchbar machen kann. Um diese Fehlerquelle zu eliminieren, werden alle Zustände über dem Sensor, die zwischen dem Auslösen eines Wischbefehls und - innerhalb eines Wischzyklus - der letztmaligen Berührung des Meßfelds durch das Wischerblatt unterdrückt. Mit der Auswertung des Signals S wird deshalb gemäß Fig 4 erst wieder zum Zeitpunkt t₁ begonnen.

Die Erfindung kann mit Hilfe diskreter Schaltelemente oder mit Hilfe von programmierten Rechnern realisiert werden. Da die diskreten Schaltmitteln für die Realisierung der Erfindung bekannt sind, brauchen sie nicht näher beschrieben zu werden.

Auch eine Angabe von Flußdiagrammen erübrigt sich, da es dem Fachmann bekannt ist, wie die Flußdiagramme ausgelegt sein müssen, um die vorstehend beschriebenen Eigenschaften der Erfindung zu realisieren.

Es versteht sich, daß die im Zusammenhang mit einer Scheibenwischer-Steuerung beschriebene Erfindung auch für andere Zwecke einsetzbar ist, z. B. zum Öffnen und Schließen von Schiebedächern.

Gleichgültig ist auch, ob das Sensorsignal die Änderung eines Widerstands, einer Kapazität oder eines Lichtreflexionsfaktors darstellt. Wesentlich ist nur, daß zwischen dem Sensorsignal und der Feuchtigkeit auf der Windschutzscheibe ein funktionaler Zusammenhang besteht.

## Patentansprüche

1. Einrichtung für die automatische Steuerung eines Scheibenwischermotors, mit
a) einem Feuchtigkeitssensor, der in Abhängigkeit von der Feuchtigkeit ein Signal abgibt;
b) eine Auswerteeinrichtung, welche das sich während der Zeit ändernde Signal des Feuchtigkeitssensors auswertet;
c) eine Signalquelle, die in Abhängigkeit von dem sich ändernden Signal (S) des Feuchtigkeitssensors eine Schwellwert-Funktionskurve (F) abgibt, wobei die Schwellwert-Funktionskurve (F) erst dann geändert wird, wenn das Signal (S) des Feuchtigkeitssensors einen neuen Extremwert aufweist;
**dadurch gekennzeichnet,** daß
d) alle Änderungen des Signals (S), die einen vorgegebenen Betrag dann erreichen oder übersteigen, wenn das Signal (S) des Sensors die Schwellwert-Funktionskurve (F) überschreitet oder überschritten hat, gezählt werden; und
e) bei Erreichen einer vorgegebenen Zahl dieser Änderungen des Signals (S) der Scheibenwischermotor aktiviert wird.

2. Einrichtung nach Anspruch 1, **dadurch gekennzeichnet**, daß die Schwellwert-Funktionskurve (F) im allgemeinen eine Gerade parallel zur Abszisse ist, deren Amplitude nur dann geändert wird, wenn das Signal (S) einen neuen Maximalwert einnimmt, der einen früheren Maximalwert übersteigt.

3. Einrichtung nach Anspruch 1, **dadurch gekennzeichnet**, daß während des Wischvorgangs die Änderungsbeträge des Signals (S) nicht gezählt werden, und eine Auswertung dieses Signals (S) erst wieder erfolgt, wenn das Wischerblatt den Sensor wieder verlassen hat.

4. Einrichtung nach Anspruch 1, **dadurch gekennzeichnet**, daß bei Erreichen einer vorgegebenen Anzahl von Überschreitungen der Schwellwert-Funktionskurve (F) durch die Änderungsbeträge des Signals (S) die Schwellwert-Funktionskurve (F) neu ermittelt wird, und zwar bezogen auf die Amplitude des Signals (S) zum Zeitpunkt des Einschaltens des Scheibenwischermotors.

5. Einrichtung nach Anspruch 4, **dadurch gekennzeichnet,** daß eine Amplitudenerhöhung (VI) des Signals (S) während des Wischvorgangs eine Anpassung der Schwellwert-Funktionskurve (F) nach sich zieht.

6. Einrichtung für die automatische Steuerung eines Scheibenwischermotors, mit
a) einem Feuchtigkeitssensor, der in Abhängigkeit von der Feuchtigkeit ein Signal abgibt;
b) einer Auswerteeinrichtung, welche das sich während der Zeit ändernde Signal des Feuchtigkeitssensors auswertet;
**dadurch gekennzeichnet**, daß
c) eine Schwellwert-Funktionskurve (F) in Abhängigkeit von dem Signal (S) ermittelt wird;
d) die Amplitude des Signals (S) innerhalb einer vorgegebenen Zeit mit den zugeordneten Amplitudenwerten der Schwellwert-Funktionskurve verglichen wird;
e) bei einer vorgegebenen Anzahl von aufeinanderfolgenden Vergleichen, bei denen der Abstand zwischen Signal (S) und Funktionskurve (F) stets kleiner wird, der Scheibenwischermotor aktiviert wird.

7. Einrichtung nach Anspruch 1, **dadurch gekennzeichnet**, daß dann, wenn die Amplitude des Signals (S) die gerade geltende Schwellwert-Funktionskurve (F) erheblich unterschreitet, eine neue Schwellwert-Funktionskurve (F) auch dann ermittelt wird, wenn die Anzahl Z nicht erreicht wird.

8. Einrichtung nach Anspruch 1, **dadurch gekennzeichnet**, daß dann, wenn die Amplitude des Signals (S) die gerade geltende Schwellwert-Funktionskurve (F) erheblich unterschreitet und wenn innerhalb einer kurzen darauffolgenden Zeit eine weitere Amplitude des Signals (S) auftritt, welche die gerade geltende Schwellwert-Funktionskurve (F) erheblich unterschreitet, der Scheibenwischermotor betätigt wird.

## Claims

1. A device for the automatic control of a windscreen wiper motor, having
a) a moisture sensor which, in dependence on the moisture, emits a signal;
b) an evaluating device which evaluates the signal, changing over time, from the moisture sensor;
c) a signal source which, in dependence on the changing signal (S) from the moisture sensor, emits a threshold function curve (F), the threshold function curve (F) only being changed once the signal (S) from the moisture sensor has a new extreme value;
characterized in that
d) all the changes in the signal (S) which reach or exceed a predetermined amount once the signal (S) from the sensor exceeds or has exceeded the threshold function curve (F) are counted; and
e) once a predetermined number of these changes in the signal (S) is reached, the windscreen wiper motor is activated.

2. A device according to Claim 1, characterized in that the threshold function curve (F) is generally a straight line parallel to the abscissa, whereof the amplitude is only changed once the signal (S) adopts a new maximum value exceeding an earlier maximum value.

3. A device according to Claim 1, characterized in that during the wiping procedure the amounts of changes to the signal (S) are not counted, and this signal (S) is only evaluated again once the wiper blade has left the sensor again.

4. A device according to Claim 1, characterized in that when the threshold function curve (F) has been exceeded a predetermined number of times by the amounts of changes to the signal (S), the threshold function curve (F) is determined afresh, in relation to the amplitude of the signal (S) at the time the windscreen wiper motor is switched on.

5. A device according to Claim 4, characterized in that an increase (VI) in the amplitude of the signal (S) during the wiping procedure brings about an adaptation of the threshold function curve (F).

6. A device for the automatic control of a windscreen wiper motor, having
a) a moisture sensor which, in dependence on the moisture, emits a signal;
b) an evaluating device which evaluates the signal, changing over time, from the moisture sensor;
characterized in that
c) a threshold function curve (F) is determined in dependence on the signal (S);
d) the amplitude of the signal (S) within a predetermined time is compared with the associated amplitude values of the threshold function curve;
e) at a predetermined number of successive comparisons in which the interval between the signal (S) and the function curve (F) continues to decrease, the windscreen wiper motor is activated.

7. A device according to Claim 1, characterized in that once the amplitude of the signal (S) falls substantially below the currently valid threshold function curve (F), a new threshold function curve (F) is determined even if the number Z has not been reached.

8. A device according to Claim 1, characterized in that once the amplitude of the signal (S) falls substantially below the currently valid threshold function curve (F) and when a further amplitude of the signal (S) which falls substantially below the currently valid threshold function curve (F) occurs within a brief time following this, the windscreen wiper motor is activated.

## Revendications

1. Dispositif pour la commande automatique d'un moteur d'essuie-glaces comprenant :
a) un capteur d'humidité qui délivre un signal en fonction de l'humidité ;
b) un dispositif d'analyse qui analyse le signal, se modifiant dans le temps, du capteur d'humidité,
c) une source de signaux, qui émet une courbe de fonction de valeur-seuil (F) suivant le signal (S) modifié du capteur d'humidité, la courbe de fonction de valeur-seuil (F) n'étant modifiée que si le signal (S) du capteur d'humidité présente une nouvelle valeur extrême, ;caractérisé en ce que
d) toutes les modifications du signal (S), qui atteignent ou dépassent un montant prédéterminé, quand le signal (S) du capteur dépasse ou a dépassé la courbe de fonction de valeur-seuil (F), sont comptabilisées ; et
e) quand un nombre prédéterminé de modifications de ce signal (S) est atteint, le moteur d'essuie-glaces est activé.

2. Dispositif selon la revendication 1, caractérisé en ce que la courbe de fonction de valeur-seuil (F) est en général une droite parallèle à l'abscisse dont l'amplitude n'est modifiée que si le signal (S) prend une nouvelle valeur maximale dépassant une valeur maximale antérieure.

3. Dispositif selon la revendication 1, caractérisé en ce que pendant la procédure d'essuyage, les montants de modification du signal (S) ne sont pas comptés et une analyse de ce signal (S) ne se produit que quand la raclette a de nouveau quitté le capteur.

4. Dispositif selon la revendication 1, caractérisé en ce qu'en atteignant un nombre prédéterminé de dépassements de la courbe de fonction de valeur-seuil (F), la courbe de fonction de valeur-seuil (F) est de nouveau déterminée par les montants de modification du signal (S) et, ce, par rapport à l'amplitude du signal (S) au moment du déclenchement du moteur d'essuieglaces.

5. Dispositif selon la revendication 4, caractérisé en ce qu'une augmentation d'amplitude (VI) du signal (S) entraîne une adaptation de la courbe de fonction de valeur-seuil (F) pendant la procédure d'essuyage.

6. Dispositif pour la commande automatique d'un moteur d'essuie-glaces comprenant :
a) un capteur d'humidité qui délivre un signal en fonction de l'humidité ;
b) un dispositif d'analyse qui analyse le signal, se modifiant dans le temps, du capteur d'humidité,
caractérisé en ce que
c) une courbe de fonction de valeur-seuil (F) est déterminée en fonction du signal (S) ;
d) l'amplitude du signal (S) est comparée, pendant une période prédéterminée, aux valeurs d'amplitude associées de la courbe de fonction de valeur-seuil ;
e) pour un nombre prédéterminé de comparaisons consécutives où l'écart entre le signal (S) et la courbe de fonction (F) va constamment en diminuant, le moteur d'essuie-glaces est activé.

7. Dispositif selon la revendication 1, caractérisé en ce que, si l'amplitude du signal (S) est considérablement en dessous de la courbe de fonction de valeur-seuil (F), précisément en vigueur, une nouvelle courbe de fonction de valeur-seuil (F) n'est également déterminée que si le nombre Z n'est pas atteint.

8. Dispositif selon la revendication 1, caractérisé en ce que, si l'amplitude du signal (S) est considérablement en dessous de la courbe de fonction de valeur-seuil (F), précisément en vigueur, et si, dans une courte période de temps consécutive, il se produit une autre amplitude du signal (S), considérablement en dessous de la courbe de fonction de valeur-seuil (F), le moteur d'essuie-glaces est activé.
